# EUROPÄISCHE PATENTSCHRIFT

(11) **EP 1 889 760 B1**
(45) Veröffentlichungstag und Bekanntmachung des Hinweises auf die Patenterteilung: **29.02.2012**
(21) Anmeldenummer: 06022225.4
(22) Anmeldetag: 24.10.2006
(51) Int. Cl.: B60R 25/02, B60C 23/06

(54) **Verriegelungssystem für die Lenkung eines Kraftfahrzeugs**
Locking system for the steering of a motor vehicle
Système de verrouillage pour la direction d'un véhicule automobile

(30) Priorität: 17.08.2006 GB 0616373
(43) Veröffentlichungstag der Anmeldung: 20.02.2008
(73) Patentinhaber: Delphi Technologies, Inc., Troy, Michigan 48007 (US)
(72) Erfinder: Dr. Langenbach, Julia, 57482 Wenden (DE)
(74) Vertreter: Denton, Michael John

(56) Entgegenhaltungen:
- EP-A- 1 522 471
- WO-A1-02/42095
- DE-A1- 3 101 645
- DE-A1- 10 335 908
- DE-A1- 19 962 072
- DE-C1- 19 741 438
- US-B1- 6 952 059

## Beschreibung

Die vorliegende Erfindung betrifft ein Verriegelungssystem für die Lenkung eines Kraftfahrzeugs.

Die Lenkradsperre eines Kraftfahrzeugs darf in aller Regel nur dann betätigt werden, wenn sich das Kraftfahrzeug nicht bewegt, da ansonsten das Kraftfahrzeug aufgrund der Arretierung des Lenkrads nicht mehr beherrschbar wäre. Im Falle einer mechanischen Lenkradsperre und einem mechanischen Zündschlüssel wird die Lenksäule verriegelt, indem von dem Fahrer der Zündschlüssel aktiv aus dem Zündschloss gezogen wird, wodurch ein Bolzen die Lenksäule verriegelt.
Im Falle einer elektromechanischen Lenkradsperre, also einer mechanischen Lenkradsperre, welche elektronisch angesteuert wird, müssen gewisse Vorkehrungen getroffen werden, um eine unbeabsichtigte Betätigung der Lenkradsperre auszuschließen. Dies gilt insbesondere im Falle eines "Passive-Go"-Systems bzw. im Fall eines "Keyless-Go"-Systems, welche sich dadurch auszeichnen, dass der Motor des Kraftfahrzeugs nach einer entsprechenden Legitimierung des Fahrers mit Hilfe eines Startknopfes angelassen wird. In diesem Fall besteht keine mechanische Interaktion zwischen dem Zündschlüssel und dem Fahrzeug, so dass es auch keine bewusste Betätigung der Lenkradsperre durch ein Abziehen des Zündschlüssels aus dem Zündschloss gibt. Wenn beispielsweise der Motor abgestellt wird, kann sich das Kraftfahrzeug immer noch bewegen, so dass in diesem Falle eine unbeabsichtigte Betätigung der Lenkradsperre unerwünscht ist. Ferner sollte das Kraftfahrzeug auch dann steuerbar bleiben, wenn es beispielsweise mit abgestelltem Motor abgeschleppt wird.

Um zu verhindern, dass die Lenkradsperre bei einem Keyless-Go-System unbeabsichtigt aktiviert wird, obwohl sich das Kraftfahrzeug noch bewegt, wurden unterschiedliche Maßnahmen vorgeschlagen, welche jeweils auf Sekundärinformationen zugreifen, um daraus einen Rückschluss darauf zu ziehen, ob sich das Kraftfahrzeug noch bewegt oder nicht. Bei diesen Sekundärinformationen kann es sich beispielsweise um Informationen hinsichtlich des Schließzustands der Türen (Türen auf oder Türen zu), der Türkontakte oder der Position des Zündschlüssels (innerhalb oder außerhalb des Kraftfahrzeugs) handeln. Alternativ hierzu wurde auch vorgeschlagen, auf direkte Informationsquellen hinsichtlich des Bewegungszustands des Kraftfahrzeugs zurückzugreifen, wobei insbesondere auf Geschwindigkeitsinformationen des Kraftfahrzeugs zurückgegriffen wurde, welche beispielsweise bereits durch ein ABS- und/oder ein ESP-System bereit stehen. Derartige Verriegelungssysteme sind beispielsweise bekannt aus: DE 197 41 438 C1, US 6,952,059 B1 oder DE 103 35 908 A1. Dabei ist die US 6,952,059 B1 gattungsbildend.

Es ist eine Aufgabe der vorliegenden Erfindung, ein Verriegelungssystem für die Lenkung eines Kraftfahrzeugs anzugeben, welches zuverlässiger als die zuvor beschriebenen Systeme arbeitet.

Diese Aufgabe wird mit einem Verriegelungssystem mit den Merkmalen des Anspruchs 1 gelöst. Insbesondere erfolgt die Lösung der Aufgabe dadurch, dass das Verriegelungssystem neben der elektromechanischen Verriegelungseinrichtung zum Sperren der Lenkung eine Sensoreinrichtung umfasst, welche eingerichtet ist, um in Abhängigkeit des Bewegungszustands des Kraftfahrzeugs ein diesen Bewegungszustand qualitativ repräsentierendes Signal zu erzeugen. Darüber hinaus umfasst das Verriegelungssystem erfindungsgemäß ferner eine Steuereinrichtung, welche eingerichtet ist, um die Verriegelungseinrichtung in Abhängigkeit des von der Sensoreinrichtung empfangenen Signals zu betätigen.

Der Erfindung liegt die Erkenntnis zugrunde, dass es, um eine Aussage darüber treffen zu können, ob eine Lenkradsperre betätigt werden darf oder nicht, nicht erforderlich ist, quantitative Informationen über die Fahrzeuggeschwindigkeit zu kennen, sondern dass es ausreicht, Kenntnis darüber zu haben, ob sich das Fahrzeug bewegt oder nicht. Im Unterschied zu den eingangs beschriebenen Systemen unter Rückgriff auf ABS- oder ESP-Informationen hinsichtlich der Fahrzeuggeschwindigkeit, bei der es sich um ein quantitatives Signal hinsichtlich des Bewegungszustands des Kraftfahrzeugs handelt, arbeitet das erfindungsgemäße Verriegelungssystem auf Basis eines den Bewegungszustand des Kraftfahrzeugs lediglich qualitativ repräsentierenden Signals bei dem nur die Information verarbeitet werden muss, ob sich das Fahrzeug bewegt oder nicht.

Um der Steuereinrichtung Informationen hinsichtlich des Bewegungszustands des Fahrzeugs als Entscheidungsgrundlage dafür zur Verfügung zu stellen, ob es zulässig ist, die Verriegelungseinrichtung zu aktivieren oder nicht, muss somit der Motor des Kraftfahrzeugs nicht laufen, so dass beispielsweise in einer Abschleppsituation oder wenn sich das Kraftfahrzeug nach Abstellen des Motors noch zufällig oder unbeabsichtigt bewegt, eine Betätigung der Lenkradsperre ausgeschlossen ist.

Vorteilhafte Weiterbildungen des erfindungsgemäßen Verriegelungssystems ergeben sich aus den abhängigen Ansprüchen, der Beschreibung sowie aus den Zeichnungen.

So reicht es im Unterschied zu ABS- oder ESP-Systemen, bei denen es erforderlich ist, genaue Informationen hinsichtlich der Rotationsgeschwindigkeit der einzelnen Räder des Kraftfahrzeugs zu erfassen, zur Realisierung des erfindungsgemäßen Verriegelungssystems aus, wenn die Sensoreinrichtung derart eingerichtet ist, dass sie erkennt, ob sich das Kraftfahrzeug bewegt oder nicht. Die Verarbeitung eines derartigen rein qualitativen (binären) Signals erfordert wesentlich weniger Arbeitsspeicherkapazität als die Verarbeitung eines quantitativen Geschwindigkeitssignals wie es bei ABS- bzw. ESP-Systemen benötigt wird, weshalb das erfindungsgemäße Verriegelungssystem und insbesondere die Sensoreinrichtung auch bei ausgeschaltetem Motor lediglich unter Rückgriff auf die von der Batterie des Kraftfahrzeugs gelieferte Energie in einer Art Standby- oder Ruhebetrieb aktiv sein kann.

Dadurch, dass die Sensoreinrichtung erkennt, ob sich das Kraftfahrzeug bewegt oder nicht, und dementsprechend eine Verriegelung der Lenkung durch die Steuereinrichtung nur dann zugelassen wird, wenn sich das Kraftfahrzeug nicht bewegt, besteht keine Gefahr, dass die Lenkradsperre des Kraftfahrzeugs unbeabsichtigt betätigt wird bzw. betätigt werden kann, solange sich das Kraftfahrzeug noch bewegt. Dies wird insbesondere dadurch erreicht, dass die Steuereinrichtung eingerichtet ist, die Verriegelungseinrichtung nur dann zu aktivieren, wenn die Sensoreinrichtung festgestellt hat, dass das Kraftfahrzeug sich nicht bewegt. Im Umkehrschluss bedeutet dies, dass die Steuereinrichtung eingerichtet ist, eine Betätigung der Verriegelungseinrichtung zu verhindern, solange durch die Sensoreinrichtung festgestellt wird, dass sich das Kraftfahrzeug bewegt bzw. dass sich zumindest noch ein Rad des Kraftfahrzeugs dreht.

Im Unterschied zu bekannten Systemen wird die Betätigung der Lenkradsperre somit nicht in Abhängigkeit von Sekundärinformationen, wie beispielsweise dem Schließzustand der Türen freigegeben; vielmehr erfolgt die Entscheidung, ob die Lenkradsperre betätigt werden darf oder nicht, auf Grundlage von Informationen, die den Bewegungszustand des Kraftfahrzeugs unmittelbar repräsentieren, wie beispielsweise der Drehung zumindest eines der Räder des Kraftfahrzeugs. Dementsprechend ist die Sensoreinrichtung eingerichtet, den Bewegungszustand des Kraftfahrzeugs in Abhängigkeit einer etwaigen Drehung zumindest eines der Räder des Kraftfahrzeugs zu bestimmen.

Zwar kann es vorteilhaft sein, die Drehung sämtlicher Räder des Kraftfahrzeugs zu überwachen, und ein Einfallen der Lenkradsperre nur dann zuzulassen, wenn sich keines der Räder mehr dreht. Bei einer kostengünstigeren Ausgestaltung des Verriegelungssystems kann es jedoch auch ausreichen, mit Hilfe der Sensoreinrichtung den Bewegungszustand des Kraftfahrzeugs in Abhängigkeit einer etwaigen Drehung nur eines einzigen Rads des Kraftfahrzeugs zu bestimmen, da sich in aller Regel bei einer Bewegung eines Kraftfahrzeugs alle Räder drehen, so dass es ausreichend sein kann, mit der Sensoreinrichtung nur ein einziges Rad zu überwachen. Da es jedoch Abschlepptechniken gibt, bei denen eine Achse des abzuschleppenden Fahrzeugs angehoben wird, sollte jedoch zumindest immer eines der Räder jeder Achse von der Sensoreinrichtung überwacht werden. Auf diese Weise kann sichergestellt werden, dass das Fahrzeug auch dann manövrierfähig bleibt, wenn nur noch die Räder einer Achse auf der Fahrbahn aufstehen. Alternativ kann das Verriegelungssystem jedoch auch aktiv ausgeschaltet werden, so dass das Fahrzeug im Falle einer Abschleppsituation in jedem Falle beherrschbar bleibt.

Um qualitativ den Bewegungszustand des Kraftfahrzeugs bzw. der Räder des Kraftfahrzeugs zu erfassen, kann die Sensoreinrichtung beispielsweise einen Drehzahlsensor an zumindest einem Rad des Kraftfahrzeugs umfassen. Bei diesem Radsensor kann es sich beispielsweise um eine magnetisch-induktive Einrichtung handeln, welche bei einer Drehung des Rads durch Induktion hervorgerufene Spannungsimpulse liefert.

Neuere Kraftfahrzeuge werden in jüngster Zeit zum Teil auch serienmäßig mit sogenannten Reifendruckkontrollsystemen (englisch: tire pressure monitoring system - kurz: TPMS) ausgestattet, über welche neben der eigentlichen Reifendrucküberwachung auch Informationen zur Verfügung gestellt werden können, ob sich ein oder mehrere Räder des Kraftfahrzeugs drehen. Diese Informationen können von Radsensoren des Reifendruckkontrollsystems geliefert werden, damit das Reifendruckkontrollsystem in Abhängigkeit der Radsensorsignale eine Aussage darüber treffen kann, welches der Räder aktuell von einem Druckabfall betroffen ist.
Erfindungsgemäß werden daher die bereits vorliegenden Informationen der Radsensoren eines Reifendruckkontrollsystems verwendet, um eine Aussage darüber zu treffen, ob sich das Fahrzeug bewegt oder nicht, so dass keine zusätzlichen Sensorelemente vorgesehen werden müssen. Da derartige Reifendruckkontrollsysteme in aller Regel auch bei ausgeschaltetem Motor aktiv sind, liegen somit die Informationen der Radsensoren derartiger Reifendruckkontrollsysteme auch bei ausgeschaltetem Motor vor, so dass ein unbeabsichtigtes Betätigen des Verriegelungssystems auch beispielsweise während einer Abschleppsituation mit abgeschaltetem Motor verhindert werden kann.
Da diese Informationen bei den genannten Reifendruckkontrollsystemen von den einzelnen Rädern durch Funk an eine gemeinsame Empfangseinheit gesendet werden, kann die Sensoreinrichtung des erfindungsgemäßen Verriegelungssystems ebenfalls auf die Sende- und Empfangseinheiten eines derartigen Reifendruckkontrollsystems zur Realisierung seiner Sensorfunktionalität zumindest teilweise zurückgreifen, wodurch sich die Sensoreinrichtung verhältnismäßig kostengünstig realisieren lässt.

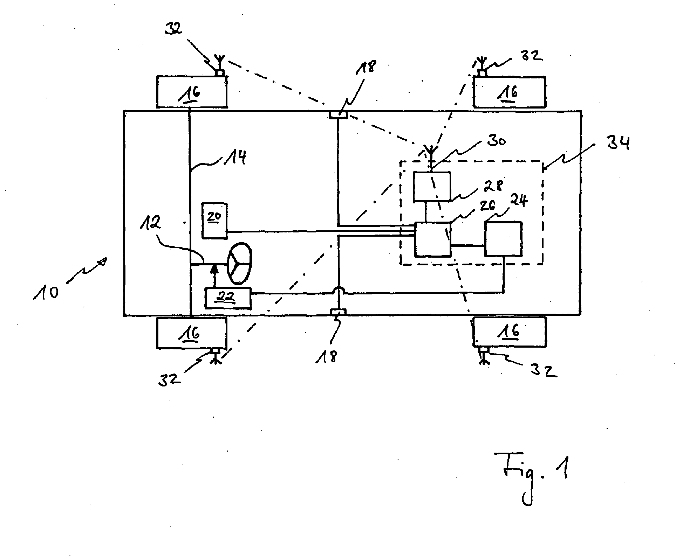

Im Folgenden wird die vorliegende Erfindung anhand eines exemplarischen Ausführungsbeispiels unter Bezugnahme auf die beigefügte Figur genauer erläutert. Die
- Fig. 1: zeigt ein Funktionsschaubild eines erfindungsgemäßen Verriegelungssystems in Kombination mit einem Reifendruckkontrollsystem.

Die Fig. 1 zeigt eine schematische Draufsicht auf ein Kraftfahrzeug 10, welches mit einem erfindungsgemäßen Verriegelungssystem zum Sperren der Lenkung 12 ausgestattet ist. Das Kraftfahrzeug 10 weist zwei mit einer Lenkachse 14 verbundene Vorderräder 16 auf, welche über die Lenkung 12 gelenkt werden können.

Als zentrale Steuerung umfasst das Kraftfahrzeug 10 eine Motorsteuereinheit 34, mit welcher der Betrieb des Motors des Kraftfahrzeugs 10 sowie vom Betrieb des Motors abhängige oder damit in Verbindung stehende Komponenten des Kraftfahrzeugs 10 gesteuert werden. Die Motorsteuereinheit 34 umfasst beispielsweise eine Empfangseinheit 28 mit einer Empfangsantenne 30 sowie eine Auswerteeinheit 26 zur Auswertung der von der Empfangseinheit 28 empfangenen Signale. Von der Empfangsantenne 30 und der nachgeschalteten Empfangseinheit 28 können beispielsweise von einem elektronischen Schlüssel gesendete Steuersignale empfangen und anschließend von der Auswerteeinheit 26 verarbeitet werden, so dass in Ansprechen auf die Steuersignale des elektronischen Schlüssels beispielsweise Türschlösser 18 des Kraftfahrzeugs 10 betätigt, beispielsweise ver- oder entriegelt werden können.

In der Fig. 1 ist ferner ein Reifendruckkontrollsystem ansatzweise in Form von Radsensoren 32 mit zugehörigen Sendeantennen an den einzelnen Rädern 16 des Kraftfahrzeugs 10 angedeutet. Über die Radsensoren 32 lassen sich Informationen hinsichtlich des aktuellen Bewegungszustands der jeweiligen Räder 16 erfassen, welche über die zugehörigen Sendeantennen an die Empfangsantenne 30 mit der zugehörigen Auswerteeinheit 26 gesendet werden können, so dass die Auswerteeinheit 26, welche insofern Bestandteil des Reifendruckkontrollsystems ist, nach Auswertung der einzelnen Informationen eine Aussage darüber treffen kann, von welchem Rad 16 das jeweilige Signal stammt. Sollte bei einem der Räder 16 auf diese Weise ein zu geringer Druck identifiziert werden, so kann dies beispielsweise auf einem Display 20 signalisiert werden, um den Fahrer zu warnen.

Erfindungsgemäß greift nun das Verriegelungssystem teilweise auf die Funktionalität der Motorsteuereinheit 34 und insbesondere auch auf die Sensoreinrichtung des Reifendruckkontrollsystems zu, welche durch die Radsensoren 32 einschließlich der Empfangsantenne 30, der Empfangseinheit 28 sowie der Auswerteeinheit 26 gebildet wird.

Das erfindungsgemäße Verriegelungssystem weist neben der Sensoreinrichtung 32, 30, 28, 26, welche insoweit durch die Funktionalität des Reifendruckkontrollsystems zur Verfügung gestellt wird, ferner eine Verriegelungseinrichtung 22 zum Sperren der Lenksäule 12 des Kraftfahrzeugs 10 sowie eine Steuereinrichtung 24 auf, welche eingerichtet ist, um die Verriegelungseinrichtung 22 in Abhängigkeit von den von der Sensoreinrichtung 32, 30, 28, 26 empfangenen Signalen zu steuern.

Da es ausreichend ist, ein den Bewegungszustand des Kraftfahrzeugs 10 qualitativ repräsentierendes Signal zur Verfügung zu haben, um eine Aussage darüber zu liefern, ob sich das Kraftfahrzeug 10 bewegt oder nicht, greift die Steuereinrichtung 24 auf die Funktionalität der Sensoreinrichtung 32, 30, 28, 26 des Reifendruckkontrollsystems zurück, da über die Radsensoren 32 eine Informationen dahingehend geliefert werden kann, ob sich das jeweils betroffene Rad überhaupt dreht oder nicht. Diese qualitative Information steht auch dann zur Verfügung, wenn der Motor des Kraftfahrzeugs 10 ausgeschaltet ist, so dass mit dem Verriegelungssystem der vorliegenden Erfindung beispielsweise auch während einer Abschleppsituation des Kraftfahrzeugs 10 wirkungsvoll ein unbeabsichtigtes Betätigen der Lenkradsperre verhindert werden kann.

Der Vollständigkeit halber sei abschließend erwähnt, dass das Verriegelungssystem lediglich eingerichtet ist, die Verriegelungseinrichtung 20 zu betätigen, wenn festgestellt wurde, dass sich das Kraftfahrzeug 10 nicht (mehr) bewegt. Das Verriegelungssystem deaktiviert jedoch nicht die Verriegelungseinrichtung 20, wenn festgestellt wurde, dass sich das Kraftfahrzeug 10 wieder bewegt, da dies dem Sinn einer Wegfahrsperre entgegenstehen würde. Vielmehr bedarf es zusätzlicher Vorkehrungen, um die Verriegelungseinrichtung 20 zu deaktivieren, um das Kraftfahrzeug wieder in Bewegung setzen zu können.

Darüber hinaus kann in das Verriegelungssystem eine Zeitschaltung integriert sein, welche eine Betätigung der Verriegelungseinrichtung 20 erst nach einer vorbestimmten Zeitspanne erlaubt, nachdem festgestellt wurde, dass sich das Fahrzeug nicht mehr bewegt. Auf diese Weise kann dafür Sorge getragen werden, dass die Verriegelungseinrichtung 20 bei einer Abschleppsituation nicht nach jedem Anhalten des Fahrzeugs wie beispielsweise an einer roten Ampel erst wieder deaktiviert werden muss, um die Fahrt fortsetzen zu können.

### Bezugszeichenliste

- 10: Kraftfahrzeug
- 12: Lenkung mit Lenkrad
- 14: Lenkachse
- 16: (Vorder-)Räder
- 18: Türschlösser
- 20: Display
- 22: Verriegelungseinrichtung
- 24: Steuereinrichtung
- 26: Auswerteeinheit
- 28: Empfangseinheit
- 30: Empfangsantenne
- 32: Radsensor mit Sendeantenne
- 34: Motorsteuereinheit

## Patentansprüche

1. Verriegelungssystem für die Lenkung (12) eines Kraftfahrzeugs (10), umfassend:
- eine Verriegelungseinrichtung (22) zum Sperren der Lenkung (12) des Kraftfahrzeugs (10);
**gekennzeichnet durch**
- eine Sensoreinrichtung (32, 30, 28, 26), welche eingerichtet ist, um in Abhängigkeit des Bewegungszustands des Kraftfahrzeugs (10) ein diesen Bewegungszustand rein qualitativ repräsentierendes Signal zu erzeugen; und
- eine Steuereinrichtung (24), welche eingerichtet ist, um die Verriegelungseinrichtung in Abhängigkeit des von der Sensoreinrichtung (32, 30, 28, 26) empfangenen Signals zu betätigen,
**dadurch gekennzeichnet, dass** die Funktionalität der Sensoreinrichtung (32, 30, 28, 26) **durch** ein Reifendruckkontrollsystems zur Verfügung gestellt wird

2. Verriegelungssystem nach Anspruch 1,
**dadurch gekennzeichnet, dass** die Sensoreinrichtung (32, 30, 28, 26) eingerichtet ist, um zu erkennen, ob sich das Kraftfahrzeug (10) bewegt oder nicht.

3. Verriegelungssystem nach Anspruch 1 oder 2,
**dadurch gekennzeichnet, dass** die Steuereinrichtung (24) eingerichtet ist, die Verriegelungseinrichtung (22) nur dann zu aktivieren, wenn die Sensoreinrichtung (32, 30, 28, 26) festgestellt hat, dass das Kraftfahrzeug (10) sich nicht bewegt.

4. Verriegelungssystem nach zumindest einem der vorstehenden Ansprüche,
**dadurch gekennzeichnet, dass** die Sensoreinrichtung (32, 30, 28, 26) eingerichtet ist, den Bewegungszustand des Kraftfahrzeugs (10) in Abhängigkeit einer Drehung zumindest eines der Räder (16) des Kraftfahrzeugs (10) zu bestimmen.

5. Verriegelungssystem nach Anspruch 4,
**dadurch gekennzeichnet, dass** die Sensoreinrichtung eingerichtet ist, den Bewegungszustand des Kraftfahrzeugs (10) in Abhängigkeit einer Drehung eines einzigen Rades des Kraftfahrzeugs (10) zu bestimmen.

6. Verriegelungssystem nach Anspruch 4,
**dadurch gekennzeichnet, dass** die Steuereinrichtung (24) eingerichtet ist, ein Betätigen der Verriegelungseinrichtung (22) zu verhindern, solange sich ein einziges Rad (16) dreht.

7. Verriegelungssystem nach zumindest einem der vorstehenden Ansprüche,
**dadurch gekennzeichnet, dass** die Sensoreinrichtung (32, 30, 28, 26) zumindest einen Radsensor (32) an zumindest einem Rad (16) des Kraftfahrzeugs (10) umfasst.

8. Verriegelungssystem nach zumindest einem der vorstehenden Ansprüche,
**dadurch gekennzeichnet, dass** die Sensoreinrichtung (32, 30, 28, 26) auch bei ausgeschaltetem Motor des Kraftfahrzeugs (10) aktiv ist.

9. Verriegelungssystem nach zumindest einem der vorstehenden Ansprüche,
**dadurch gekennzeichnet, dass** Verriegelungseinrichtung (22) als elektronische Lenkradsperre ausgebildet ist.

## Claims

1. Locking system for the steering (12) of a motor vehicle (10), comprising:
- a locking means (22) for locking the steering (12) of the motor vehicle (10);
**characterized by**
- a sensor means (32, 30, 28, 26) adapted for producing a signal that qualitatively represents the state of motion of the motor vehicle depending on the state of motion of the motor vehicle (10); and
- a control means (24) adapted for actuating the locking system depending on the signal received from the sensor means (32, 30, 28, 26), **characterized in that** the functionality of the sensor means (32, 30, 28, 26) is provided by a tire pressure monitoring system.

2. Locking system according to claim 1,
**characterized in that** the sensor means (32, 30, 28, 26) is adapted to detect whether the motor vehicle (10) is moving or not.

3. Locking system according to claim 1 or 2,
**characterized in that** the control means (24) is adapted to only activate the locking device (22) when the sensor means (32, 30, 28, 26) determines that the motor vehicle (10) does not move.

4. Locking system according to at least one of the preceding claims,
**characterized in that** the sensor means (32, 30, 28, 26) is adapted to determine the state of motion of the motor vehicle (10) depending on a rotation of at least one of the wheels (16) of the motor vehicle (10).

5. Locking system according to claim 4,
**characterized in that** the sensor means is adapted to determine the state of motion of the motor vehicle (10) depending on a rotation of a single wheel of the motor vehicle (10).

6. Locking system according to claim 4,
**characterized in that** the control means (24) is adapted to prevent an actuation of the locking device (22) as long as a single wheel (16) rotates.

7. Locking system according to at least one of the preceding claims,
**characterized in that** the sensor means (32, 30, 28, 26) includes at least one wheel sensor (32) on at least one wheel (16) of the motor vehicle (10).

8. Locking system according to at least one of the preceding claims,
**characterized in that** the sensor means (32, 30, 28, 26) is active even when the engine of the motor vehicle (10) is turned off.

9. Locking system according to at least one of the preceding claims,
**characterized in that** said locking means (22) is formed as an electronic steering wheel lock.

## Revendications

1. Système de verrouillage pour la direction (12) d'un véhicule automobile (10,), comprenant :
- un moyen de verrouillage (22) pour bloquer la direction (12) du véhicule automobile (10) ;
**caractérisé par**
- un moyen de détection (32, 30, 28, 26) qui est conçu pour engendrer, en fonction de l'état de déplacement du véhicule automobile (10), un signal représentant cet état de déplacement de manière purement qualitative ; et
- un moyen de commande (24) qui est conçu pour actionner le moyen de verrouillage en fonction du signal reçu par le moyen de détection (32, 30, 28, 26),
**caractérisé en ce que** la fonctionnalité du moyen de détection (32, 30, 28, 26) est mise à disposition par un système de contrôle de pression de pneumatique.

2. Système de verrouillage selon la revendication 1,
**caractérisé en ce que** le moyen de détection (32, 30, 28, 26) est conçu pour reconnaître si le véhicule automobile (10) se déplace ou non.

3. Système de verrouillage selon la revendication 1 ou 2,
**caractérisé en ce que** le moyen de commande (24) est conçu pour activer le moyen de verrouillage (22) uniquement quand le moyen de détection (32, 30, 28, 26) a constaté que le véhicule automobile (10) ne se déplace pas.

4. Système de verrouillage selon l'une au moins des revendications précédentes,
**caractérisé en ce que** le moyen de détection (32, 30, 28, 26) est conçu pour déterminer l'état de déplacement du véhicule automobile (10) en fonction d'une rotation de l'une au moins des roues (26) du véhicule automobile (10).

5. Système de verrouillage selon la revendication 4,
**caractérisé en ce que** le moyen de détection est conçu pour déterminer l'état de déplacement du véhicule automobile (10) en fonction d'une rotation d'une unique roue du véhicule automobile (10).

6. Système de verrouillage selon la revendication 4,
**caractérisé en ce que** le moyen de commande (24) est conçu pour empêcher un actionnement du moyen de verrouillage (22) aussi longtemps qu'une roue unique (16) tourne.

7. Système de verrouillage selon l'une au moins des revendications précédentes,
**caractérisé en ce que** le moyen de détection (32, 30, 28, 26) comprend au moins un capteur de roue (32) sur au moins une roue (16) du véhicule automobile (10).

8. Système de verrouillage selon l'une au moins des revendications précédentes,
**caractérisé en ce que** le moyen de détection (32, 30, 28, 26) est actif également si le moteur du véhicule automobile (10) est à l'arrêt.

9. Système de verrouillage selon l'une au moins des revendications précédentes,
**caractérisé en ce que** le moyen de verrouillage (22) est réalisé sous forme de blocage électronique du volant.
